Europäisches Patentamt

European Patent Office

Office européen des brevets

(19)

(11) Veröffentlichungsnummer : **0 145 853**
**B1**

(12) ## EUROPÄISCHE PATENTSCHRIFT

(45) Veröffentlichungstag der Patentschrift :
**19.08.87**

(51) Int. Cl.⁴ : **C 02 F   3/10**

(21) Anmeldenummer : **84110729.5**

(22) Anmeldetag : **08.09.84**

(54) **Füllng für Tropfkörper für die biologische Abwasserreinigung.**

(30) Priorität : **16.12.83 DE 3345595**

(43) Veröffentlichungstag der Anmeldung :
**26.06.85 Patentblatt 85/26**

(45) Bekanntmachung des Hinweises auf die Patenterteilung : **19.08.87 Patentblatt 87/34**

(84) Benannte Vertragsstaaten :
**AT BE CH DE FR GB IT LI LU NL SE**

(56) Entgegenhaltungen :
**EP-A- 0 056 083**
**DE-A- 2 532 344**
**US-A- 3 301 401**

(73) Patentinhaber : **von Meer, Walter, Dr., Dipl.-Ing.**
**Laeregge 7**
**D-4505 Bad Iburg (DE)**

(72) Erfinder : **Spelsberg, Hans-Hugo**
**Lothar Schoeller Strasse 8**
**D-4500 Osnabrück (DE)**

(74) Vertreter : **Rücker, Wolfgang, Dipl.-Chem.**
**Hubertusstrasse 2**
**D-3000 Hannover 1 (DE)**

EP 0 145 853 B1

**Beschreibung**

Die Erfindung betrifft eine Füllung für Tropfkörper zur biologischen Reinigung von Abwasser, bestehend aus flexiblen, sich unregelmäßig berührenden mittig, auf Tragstangen aufgehängten Streifen aus Kunststoff. Eine solche Füllung ist in der DE-A-30 47 967 beschrieben.

Bekanntlich dienen Tropfkörper der biologischen Abwasserreinigung, weil sie gegenüber anderen Einrichtungsanlagen beispielsweise Belebtschlammanlagen, gewisse Vorteile aufweisen, beispielsweise sind sie weniger empfindlich gegen Schwankungen der Abwasserzusammensetzung. Bei Tropfkörpern rieselt das Abwasser durch luftdurchlässig aufgebaute Massen, auf deren Oberfläche sich nach einer Einarbeitungszeit eine schleimige Haut, der biologische Rasen, mit einer vorwiegend aus Bakterien, Pilzen und Protozoen bestehenden Lebensgemeinschaft, bildet. An diesem biologischen Rasen werden die gelösten und colloiden organischen Stoffe des Abwassers sorbiert und von den Organismen vorwiegend aerob abgebaut. Früher sind im allgemeinen Tropfkörper mit einer Brockenfüllung verwendet worden, beispielsweise aus Schlacken. Dies ist jedoch umständlich und wenig effektvoll, weil sich die Füllungen leicht verstopfen. Es sind deshalb auch Tropfkörperfüllungen bekannt geworden mit röhren- oder pfannenförmigen Strukturen, die kurze Durchlaufzeiten und geringe Verstopfungsgefahr haben.

Es ist ferner bekannt, Tropfkörper mit langen, hängend angebrachten Folienbahnen aus Kunststoff zu füllen, die zur angeblichen Steigerung des Wirkungsgrads wellenförmig oder zick-zackförmig verformte Teilflächen haben. Nachteilig an dieser Ausgestaltung ist jedoch, daß trotz der Ausformungsmöglichkeiten die wirksame Oberfläche pro Volumeneinheit begrenzt ist.

Bei der eingangs zitierten Füllung von Tropfkörpern unter Verwendung von Folienstreifen, die auf Tragstangen, hängend angeordnet sind, ergibt sich eine ausgezeichnete Reinigung des Abwassers und der Streifen in einfacher Weise. Außerdem ist durch die Verwendung solcher Folienstreifen, die ungeordnet und unregelmäßig sich berührend, über Stangen gehängt sind, eine gute Anpassung an die zu reinigenden Abwässer, hinsichtlich ihrer Menge als auch hinsichtlich ihrer Art möglich, und vor allem ist solches Material in Streifenform, außerordentlich günstig und preiswert herzustellen und kann auf die dort beschriebene Weise auch vorteilhaft im Tropfkörper eingehängt werden.

Es hat sich doch gezeigt, daß trotz dieser Vorteile, die die Verwendung von unregelmäßig sich verdrehender Folienstreifen ergeben, auch Nachteile eintreten, insbesondere hinsichtlich der Befestigung der Streifen auf den Tragstangen und hinsichtlich der Einwirkung des Tageslichtes, insbesondere Sonnenlichtes und der darin enthaltenen UV-Strahlen.

Die Tragstangen für die Folienstreifen bilden die Oberseite des Tropfkörpers und sind in beliebiger Geometrie auf einer Grundkonstruktion gelagert, je nachdem wie der Tropfkörper ausgestaltet ist. Besonders jene Partien der Folienstreifen sind dem Angriff der UV-Strahlen oder einem mechanischen Angriff durch das Abwasser ausgesetzt, die über den Stangen liegen und frei einem Angriff zugänglich sind.

Außerdem ist die Sicherung der Streifen ungenügend, denn beim Reinigen der Einlaufspalte zwischen den Tragstangen nach einer bestimmten Betriebszeit, vor allem aber bei Montage neuer Streifenelemente, können sie verrutschen, sodaß sich ihre, in den Tropfkörper hereinhängenden Längen verändern und damit die Wirksamkeit beeinträchtigt sein kann, weil ein Teil der Streifen auf dem Boden liegt. Wichtig ist jedoch, daß die Streifen hängen, die Luft an den Streifen vorbeistreichen kann.

Schließlich ergab sich in der Praxis, daß die ursprünglichen in sich gedrehten Streifen im oberen Teil aufgrund der Belastung durch den wachsenden Bakterienrasen ihre Drehung teilweise verlieren können. Die Folge ist, daß in diesem Teil ein Zwischenraum entsteht, in dem das Abwasser frei fallen kann bis es nach etwa 1 bis 2 m wieder auf die Streifenfüllung trifft. Dadurch mindert sich der Wirkungsgrad des Tropfkörpers.

Aufgabe der vorliegenden Erfindung ist es daher, solche zur Abwasserreinigung dienenden Folienstreifen auf ihren Tragstangen zu sichern, sie gegen die Einwirkung schädlicher Strahlung, die zur Zersetzung des Kunststoffes führt und gegen mechanische Beschädigungen durch Berieselung abzuschirmen, sowie eine möglichst große Oberfläche an Folienstreifen pro Volumeneinheit des Tropfkörpers zu schaffen und insbesondere das Abwasser von Anfang an, an die Streifen zu leiten.

Gelöst wird diese Aufgabe gemäß dem kennzeichnenden Teil des Anspruchs 1.

Das Profil ist vorzugsweise ein U-Profil und so bemessen, daß es mit seinen Schenkeln, die um die Tragstangen herumführenden Folienstreifen ausreichend weit abdeckt, und der Abstand der Schenkel des U-förmigen Profils ist so bemessen, daß sie auf die Folienstreifen, die über die Tragstangen gehängt sind, einen solchen Druck ausüben, daß weder die Streifen noch das U-förmige Profil selbst von der Tragstange leicht entfernt werden kann noch auf dieser verrutschen.

In einer besonderen Ausführungsform der Profile sind die Schenkel der Abdeckprofile winklig ausgekragt und führen dann zu den Folienstreifen zurück. Die Auskragung befindet sich bei zwei benachbarten Profilen nicht auf einer Ebene, so daß ein Durchfallen des Wassers auch dann verhindert wird, wenn die Folienstreifen von benachbarten Tragstangen sich infolge ihrer Streckung im oberen Teil nicht mehr berühren. In einer anderen Ausgestaltungsform sind die Tragstangen mit Folienstreifen und Abdeckung höhenversetzt gelagert, um eine sichere Abwasserführung zu den Folienstreifen zu gewährleisten.

Die Folienstreifen, die den Innenraum des Tropfkörpers füllen, hängen mit ihren Mitten über den Tragstangen und reichen zu beiden Seiten der Tragstangen bis in die Nähe des Bodens des Tropfkörpers herab.

Jede Tragstange ist vorzugsweise mit mehreren Schichten solcher Folienstreifen behängt, dicht nebeneinander und übereinander, so daß sich dichte herabhängende Bündel von Folienstreifen ergeben und damit große Oberflächen, auf denen die biologische Reinigung des Abwassers, welches darüber hinwegrieselt, vonstatten gehen kann. Die Folienstreifen haben eine Breite von mehreren cm, vorzugsweise eine Breite zwischen 5 und 6 cm, ihre Dicke liegt zwischen 20 und 120 µm, vorzugsweise zwischen 30 und 80 µm und wie bereits oben erwähnt, sind die Streifen so lang, daß sie beiderseits der Tragstange, bis zum Boden des Tropfkörpers hinunterreichen.

Die Menge der Folienstreifen in ihrer Anordnung und in ihrer Länge ergibt sich natürlich durch die Größe, d. h. durch die Abmessung des Tropfkörpers und nach der gewünschten Dichte der Streifen untereinander. Die Streifen sind vorzugsweise in ihrem Querschnitt oder in ihren Oberflächen unterschiedlich, derart, daß sie sich korkenzieherartig, mindestens teilweise verdrillen. Die Folienstreifen bestehen aus einem sehr beständigen Material, beispielsweise aus Polyäthylen oder Polypropylen oder aus PVC oder aus einem anderen Kunststoff.

Die Folienstreifen können auch aus einem Kunststoffgemisch bestehen und ihr Querschnitt kann regelmäßig oder unregelmäßig sein. Es besteht auch die Möglichkeit der Verdrillung der Streifen in sich durch unterschiedliche Krafteinwirkung auf die Folie, aus der sie geschnitten sind, zu erzeugen. Besonders vorteilhaft kann es sein, wenn die verwendeten Folienstreifen nicht einheitlich dimensioniert und geformt sind, sondern beispielsweise unterschiedliche Dicke besitzen und infolgedessen unterschiedlich gedreht sind. Dadurch entstehen besonders viele Hohlräume und -Berührungspunkte.

Die Tragstange, über die die Folienstriefen gehängt sind, kann jeden beliebigen Querschnitt haben. So kann es sich um ein I-Profil handeln, um ein Rohr oder um eine Stange, runden oder polygonalen Querschnitts. Die Länge dieser Stangen ergibt sich aus der Länge, bzw. Breite des Innenraumes des Tropfkörpers, bzw. aus dem Abstand der Auflager für diese Tragstange. Die Tragstangen können aus einem Stück bestehen oder aus mehreren Stücken zusammengesetzt sein.

Zur Herstellung solcher Tragstangen ist jedes geeignete Material verwendbar, beispielsweise verzinkte Stahlprofile oder Aluminiumprofile oder dergleichen. Die Abdeckung und Sicherung der Streifen auf den Tragstangen erfolgt durch vorzugsweise U-förmige Profile, die aus einem Kunststoff oder aus einem Leichtmetall oder einem mineralischen Material hergestellt sind und sie müssen lichtundurchlässig sein. Es ist wichtig, daß es sich um einen lichtundurchlässigen Kunststoff handelt, ein Kunststoff, der beispielsweise schwarz pigmentiert ist oder weiß.

Anstatt U-förmigen Querschnitt für die Abdeckung und Sicherung der Folienstreifen auf den Tragstangen, kann der Querschnitt auch andere Formen haben, beispielsweise kann er dachförmig oder C-förmig profiliert sein. Das Abdeckprofil kann so lang sein wie die Tragstange, sie kann aber auch ähnlich wie die Tragstange, aus Teilen zusammengesetzt sein, die beispielsweise so lang sein können wie ein Teil der sich aus mehreren Teilen zusammensetzenden Tragstange.

Bei der sich aus Teilen bildenden Gesamtfüllung kann eine gewisse Vorfertigung stattfinden, sodaß die einzelnen Teilstangen mit Abdeckung zu vollständigen Stangen mit Abdeckung zusammengesteckt werden. Durch diese erfindungsgemäße Ausgestaltung sind die Streifen an ihren kritischen Punkten auf den Tragstangen sowohl mechanisch gegen Verrutschen und Abrutschen, gegen eine fotochemische Zersetzung ihres Materials, gegen Beschädigung durch Berieselung, sowie gegen die Einwirkung der Sonnenbestrahlung gesichert. Dadurch wird die technische Wirksamkeit weiter verbessert, weil die Streifen nunmehr länger in Betrieb gehalten werden können, die Einlaufspalten ohne Bedenken gereinigt werden können, indem man zwischen die Stangen Reinigungsgeräte einführt. Die Abdeckung der Aufhängestellen der Streifen auf den Stangen kann darüber hinaus noch zur besseren Verteilung des zu reinigenden Abwassers nutzbar gemacht werden.

Die Erfindung wird nun anhand von Ausführungsbeispielen, die in der Zeichnung dargestellt sind, näher erläutert. Es zeigen :

Figur 1 teilweise im Schnitt eine Seitenansicht einer erfindungsgemäß ausgebildeten Tragstange mit Abdeckung und Folienstreifen, eingehängt in einen Tropfkörper,

Figur 2 einen Schnitt auf der Linie II-II der Fig. 1 durch eine Tragstangen- und Abdeckungskombination, wobei die Stange eine massive im Querschnitt kreisförmige Stange ist und die Abdeckung U-Profil hat, zwischen beiden sind die auf die Stange gehängten Folienstreifen, die gesichert werden, sichtbar.

Figuren 3-7 zeigen andere Ausgestaltungen von Tragstangen und Abdeckungen, bzw. deren Anordnung im Schnitt.

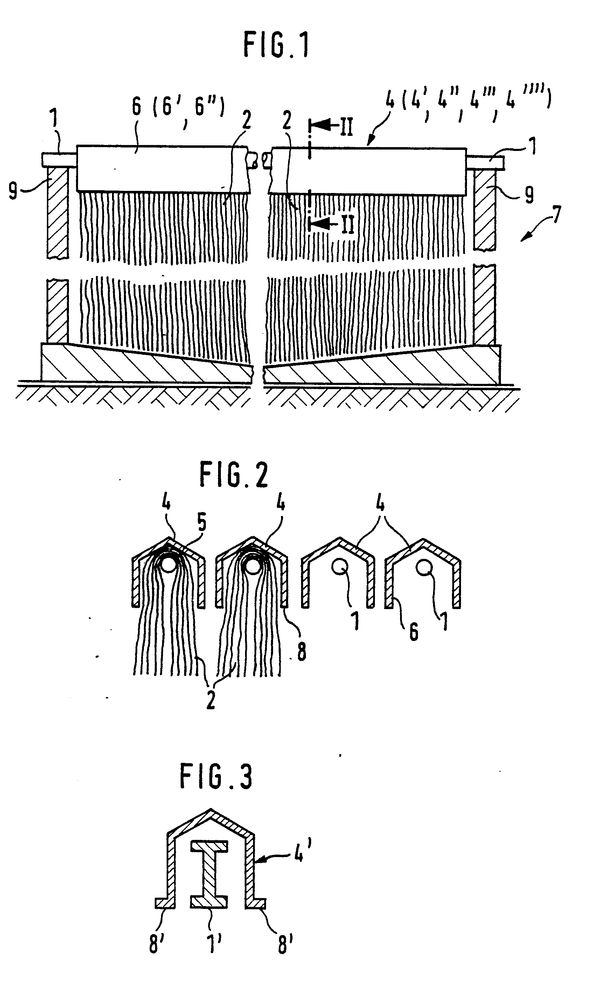

Wie aus Fig. 2 der Zeichnung hervorgeht, sind über die Tragstange 1 Folienstreifen 2 gehängt, die beiderseits der Stange bis etwa auf den Boden 3 des Tropfkörpers herabreichen. Die Folienstreifen in ihrer hängenden Anordnung sind in Fig. 1 deutlich zu erkennen. Bei den Folienstreifen handelt es sich um Kunststoffstreifen der oben beschriebenen Art, die mit ihrer Mitte über die Stange gehängt sind und zwar sowohl nebeneinander, als auch zu mehreren übereinander, so daß sich wie in Fig. 2 schematisch dargestellt, zwischen der Stange 1 und einer Abdeckung 4 ein Paket von Folienstreifen ergibt.

Diese Abdeckung 4 klemmt die Folienstreifen auf den Stangen fest und schützt die über die Stange laufenden Teile der Folienstreifen bei 5 vor der Einwirkung des Tageslichtes, der Sonnenstrahlen und der Berieselung. Die Abdeckung 4 ist im Falle dieses Ausführungsbeispieles ein U-förmiges Profil aus einem beständigen Material, beispielsweise einem Kunststoff oder einem Metall, das mit seinen Schenkeln 6 von der Seite gegen die Kunststoffstreifen 2 und auf die Stange 1 drückt.

Das Profil kann aber auch so gestaltet sein, daß die Schenkel leicht konvergierend verlaufen. In Fig. 2 ist ferner dargestellt, wie solche Stangen mit darüber hängenden Kunststoffstreifen und Abdeckungen nebeneinander in einem Tropfkörper 7 (Fig. 1) angeordnet sind, und zwar derart, daß zwischen benachbarten Abdeckungen ein ausreichender Raum verbleibt, damit das zu reinigende Wasser hindurch und auf die Folienstreifen, bzw. auf die nächste Abdeckung fließen kann. In Fig. 1 ist die Abdeckung ebenfalls mit 4 und 6 bezeichnet und die Unterbrechung in horizontaler als auch in vertikaler Anordnung soll andeuten, daß die Abmessungen praktisch beliebig sein können und sich je nach Anwendung und Art des Tropfkörpers richten. Zur Verteilung des Wassers über die Länge der Stangen und auf die Folienstreifen 2 können die Ränder 8 der Abdeckung in geeigneter Weise profiliert oder ausgestaltet sein, bzw. gezahnt sein, so daß ein geringfügiger Flüssigkeitsstau eintritt und damit an jeder Zahnvertiefung Flüssigkeit in dünnen Strömen abfließt.

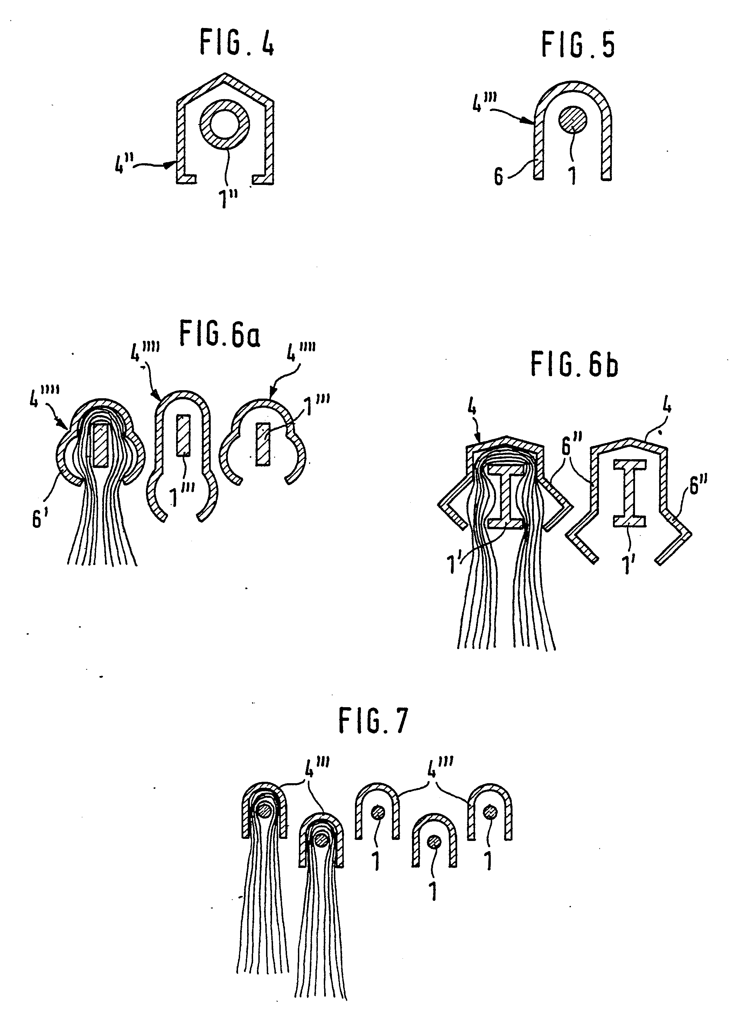

In Fig. 3 ist eine andere Ausgestaltung von Tragstangen und Abdeckungen dargestellt. Die Tragstange 1' hat I-förmiges Profil und die Abdeckung 4' hat dachförmigen Querschnitt, auch hier kann der untere Rand 8' in geeigneter Weise zur Verteilung des Wassers profiliert sein. Die Tragstange und die Abdeckung, die in Fig. 4 gezeigt sind, bestehen aus einem Rohr 1" und einem C-förmigen Profil 4" und schließlich ist es möglich, eine Abdeckung wie in Fig. 5 gezeigt ist, die mit 4" bezeichnet ist, zu gestalten, bei der der Steg nicht flach ist, sondern kreisbogenförmig verläuft (Fig. 5, 6a).

In Fig. 1 ist die Betriebs- oder Gebrauchsleitung der Tragstange mit ihrer Abdeckung und ihren Folienstreifen dargestellt. Die Tragstangen 1 liegen mit ihren Enden auf entsprechenden Mauer- oder Konstruktionsteilen 9 des Tropfkörpers auf und die Streifen 2 hängen in den Tropfkörper hinein. Durch Kombination zweier entsprechend geformter Abdeckungstypen kann schließlich ein Durchfallen des Wassers verhindert, immer eine Hinführung des Wassers zu den Folienstreifen erreicht und eine Beschädigung der Streifen durch Berieselung oder UV-Licht ferngehalten werden. Wie bereits oben erwähnt, können die Stangen 1, 1', 1" und 1"' aus Teilen zusammengesetzt sein und die Abdeckungen 4, 4', 4", 4"' und 4"" können ebenfalls aus Teilen bestehen, die in ihren Längen etwa der Länge der Teiltragstangen entsprechen. Auf diese Weise können Tragstangen und Abdeckungslängen mit darauf liegenden Folienstreifen erzeugt werden, die jedem Tropfkörper in Abmessung und Gestalt entsprechen. Auf diese Weise würde eine Lagerhaltung von unterschiedlich langen Tragstangen und Abdeckungen auf wenige Standardlängen begrenzt. Das Zusammenstecken von Tragstangen und Abdeckungen kann unter Verwendung an sich bekannter Steckverbindungen geschehen, beispielsweise derart, daß in ein Ende einer rohrförmigen Tragstange, gem. Fig. 4 ein Zapfen eingesetzt ist, der in das offene Rohrende der folgenden Tragstange eingesteckt wird, ähnlich könnte mit den Abdeckungen verfahren werden.

Wie aus Fig. 7 hervorgeht, sind die Tragstangen mit ihren Folienstreifen und Abdeckungen auf unterschiedlichem Niveau angeordnet und zwar abwechselnd. Bei dieser Anordnung ist mit Sicherheit eine gute Wasserverteilung auf alle Folienstreifen erreichbar.

Die Tragstangen sind mit 1 bezeichnet und die Abdeckungen mit 4"', es ist natürlich auch jede andere Kombination möglich.

In Fig. 6a und b sind weitere Abwandlungen der Tragstangen und Abdeckungskombinationen dargestellt. Die Tragstangen in Fig. 6a sind massive, im Querschnitt rechteckige Stangen 1"' und die Abdeckung 4"' ist ähnlich der Abdeckung 4"' in Fig. 5, jedoch sind die seitlichen Schenkel 6' bogenförmig gestaltet.

Diese bogenförmigen Schenkel können in unterschiedlicher Höhe angeordnet sein, wie Fig. 6a zeigt. Diese Anordnung ergibt eine ähnliche Wirkung wie die höhenversetzte Anordnung gem. Fig. 7. Fig. 6a kann auch abgewandelt sein wie in Fig. 6b gezeigt. Hier sind die Schenkel nicht bogenförmig, sondern abgewinkelt ausgebildet, wie bei Fig. 6" gezeigt und auch diese Abwinklungen können auf unterschiedlicher Höhe, bezogen auf den Steg des Profils, angeordnet sein.

**Patentansprüche**

1. Füllung für Tropfkörper zur biologischen Reinigung von Abwasser, bestehend aus flexiblen, sich unregelmäßig berührenden, auf Tragstangen mittig aufgehängten Streifen aus Kunststoff, dadurch gekennzeichnet, daß über die neben- und übereinander hängenden Folienstreifen (5) ein Profil (4) abdeckend gestülpt ist, welches lichtundurchlässig und so geformt ist, daß es mechanische Beschädigungen der Folienstreifen verhindert sowie das Abwasser von Anfang an an die Folienstreifen leitet, welches U-förmigen (4'), C-förmigen (4"), abgerundeten (4"') oder dachförmigen (4"") Querschnitt hat und aus einem beständigen, nicht korrodierenden Material besteht.

2. Füllung nach Anspruch 2, dadurch gekennzeichnet, daß die Abdeckprofile in den Schenkeln winklig vorspringend gestaltet sind.

3. Füllung nach Anspruch 1 bis 3, dadurch gekennzeichnet, daß die Abdeckprofile (4) aus einem nicht korrodierenden Metall oder aus einem Kunststoff oder einem mineralischen Material bestehen.

4. Füllung nach Anspruch 1 bis 4, dadurch gekennzeichnet, daß die Tragstangen (1) massive Stangen, Profile (1') oder Rohre (1") sind und aus einem beständigen, nicht korrodierenden Material bestehen.

5. Füllung nach Anspruch 1 bis 5, dadurch gekennzeichnet, daß die Schenkel der Abdeckprofile (4) konvergierend verlaufen und/oder zur Verteilung des auf sie fließenden Abwassers profiliert sind, beispielsweise an ihren unteren Rändern (bei 8) gezahnt sind.

6. Füllung nach Anspruch 1 bis 6, dadurch gekennzeichnet, daß die Tragstangen (1) mit ihrer Abdeckung (4) und den Folienstreifen (5 bzw. 2) aus Teilstücken zusammengesteckt aufgebaut sind.

7. Füllung nach Anspruch 1 bis 7, dadurch gekennzeichnet, daß die Folienstreifen Kunststoffstreifen sind und eine Breite von bis zu 8 cm haben, vorzugsweise eine Breite zwischen 5 und 6 cm, eine Dicke zwischen 20 und 120 μm, vorzugsweise zwischen 30 und 80 μm und eine Länge, die jeweils beidseitig der Tragstange (1) herunterhängen.

8. Füllung nach Anspruch 1 bis 8, dadurch gekennzeichnet, daß die Streifen (5) unterschiedlichen Querschnitt haben und zumindest in der vollen Länge korkenzieherartig gedreht sind.

9. Füllung nach Anspruch 1 bis 9, dadurch gekennzeichnet, daß die Streifen in Teilen ihrer Längen korkenzieherartig gedreht sind.

10. Füllung nach Anspruch 1-10, dadurch gekennzeichnet, daß die Folienstreifen (5) bündelweise über die Tragstange (1) gehängt sind.

## Claims

1. Packing for trickling filters for the biological cleansing of waste water, consisting of flexible plastic strips, in irregular contact with one another, concentrically suspended on supportings rods, characterized by the fact that over the plastic strips (5) suspended close to and over one another, is placed a protective profile (4) which is opaque and shaped in such a way as to prevent mechanical damage to the plastic strips and to cause the waste water to pass from the start to the plastic strips, which has a U-shaped (4'), C-shaped (4"), rounded (4'") or roof-shaped (4"") cross-section and is made of a durable, corrosion-resistant material.

2. Packing in accordance with claim 1, characterized by the fact that the p rotective profiles (4) have a projecting angular shape at the sides.

3. Packing in accordance with claims 1 and 2, characterized by the fact that the protective profiles (4) are made of a corrosion-resistant metal or a plastic or mineral material.

4. Packing in accordance with claims 1 to 3, characterized by the fact that the supporting rods (1) are solid rods, sections (1') or tubes (1") and are made of a durable, corrosion-resistant material.

5. Packing in accordance with claims 1 to 4, characterized by the fact that the sides of the protective profiles (4) are converging in shape and formed so as to distribute the waste water flowing over them, for example, are toothed along their lower edges (at 8).

6. Packing in accordance with claims 1 to 5, characterized by the fact that the supporting rods (1) with their protective cover (4) and the plastic st rips (5 or 2) are made by assembling component parts.

7. Packing in accordance with claims 1 to 6, characterized by the fact that the strips of film are strips of plastic having a width up to 8 cm, preferably a width between 5 and 6 cm, a thickness between 20 and 120 micro-meters, preferably between 30 and 80 micro-meters and a length in each case suspended from both sides of the supporting rod (1).

8. Packing in accordance with claims 1 to 7, characterized by the fact that the strips (5) are of varying cross-section and, at least in their overall length, are twisted in a corkscrew-like manner.

9. Packing in accordance with claims 1 to 8, characterized by the fact that the strips, in parts of their length, are twisted in corkscrew-like fashion.

10. Packing in accordance with claims 1 to 9, characterized by the fact that the strips of plastic (5) hang in bunches over the supporting rod (1).

## Revendications

1. Remplissage pour lits bactériens destinés à l'épuration biologique des eaux résiduaires, constitué de bandes en matière plastique, en contact irrégulier les unes avec les autres, suspendues en position centrale sur des barres porteuses, caractérisé en ce qu'au-dessus des bandes de feuille (5), suspendues les unes à côté et au-dessus des autres, est enfoncé à recouvrement un profilé (4), lequel n'est pas transparent à la lumière et est façonné de façon qu'il empêche les détériorations mécaniques des bandes de feuille, et qu'il guide, dès le début, les eaux résiduaires sur les bandes de feuille, qui possède une section en U (4'), en C (4"), arrondie (4'") ou en forme de toit (4""), et est constitué d'un matériau résistant et anti-corrosion.

2. Remplissage selon la revendication 1, caractérisé en ce que les profilés de recouvrement ont leurs branches façonnées en saillie angulaire.

3. Remplissage selon la revendication 1 ou 2, caractérisé en ce que les profilés de recouvrement (4) sont en un métal anti-corrosion, ou en une matière plastique, ou en un matériau minéral.

4. Remplissage selon les revendications 1 à 3, caractérisé en ce que les barres porteuses sont des barres pleines, des profilés (1') ou des tubes (1") et sont en un matériau résistant, anti-corrosion.

5. Remplissage selon les revendications 1 à 4, caractérisé en ce que les branches des profilés de recouvrement (4) sont convergentes ou sont profilées pour assurer la répartition des eaux résiduaires qui coulent sur elles, en étant par exemple dentées à leurs bords inférieurs (en 8).

6. Remplissage selon les revendications 1 à 5, caractérisé en ce que les barres porteuses (1), avec leur recouvrement (4) et les bandes de feuille (5 ou 2), sont constitués de tronçons réunis les uns aux autres.

7. Remplissage selon les revendications 1 à 6, caractérisé en ce que les bandes de feuille sont des bandes de matière plastique et ont une largeur allant jusqu'à 8 cm, de préférence une largeur comprise entre 5 et 6 cm, une épaisseur comprise entre 20 et 120 μm, de préférence entre 30 et 80 μm, et une longueur telle qu'elles pendent vers le bas, dans tous les cas, sur les deux côtés de la barre porteuse (1).

8. Remplissage selon les revendications 1 à 7, caractérisé en ce que les bandes (5) ont des sections différentes, et présentent une torsion en tire-bouchon, au moins sur toute leur longueur.

9. Remplissage selon les revendications 1 à 8, caractérisé en ce que les bandes présentent une torsion en tirebouchon sur des parties de leur longueur.

10. Remplissage selon les revendications 1 à 9, caractérisé en ce que les bandes de feuille (5) sont suspendues en faisceaux sur la barre porteuse (1).

# FIG.1

# FIG.2

# FIG.3

FIG.4

FIG.5

4"

1"

4""

6

1

FIG.6a

4""

4""

4""

6'

1""

FIG.6b

4

4

6"

6"

1'

1'

FIG.7

4"'

4"'

1

1

1

2